# EUROPÄISCHE PATENTSCHRIFT

(11) **EP 0 722 397 B1**
(45) Veröffentlichungstag und Bekanntmachung des Hinweises auf die Patenterteilung: **01.10.1997**
(21) Anmeldenummer: 94930187.3
(22) Anmeldetag: 18.10.1994
(51) Int. Cl.: B60T 7/12, B60T 8/48, B60T 13/68, B60T 7/22

(54) **BREMSANLAGE FÜR KRAFTFAHRZEUGE**
BRAKE SYSTEM FOR MOTOR VEHICLES
SYSTEME DE FREINAGE POUR VEHICULES AUTOMOBILES

(30) Priorität: 19.10.1993 DE 4335676
(43) Veröffentlichungstag der Anmeldung: 24.07.1996
(73) Patentinhaber: ITT Automotive Europe GmbH, 60488 Frankfurt (DE)
(72) Erfinder: FEIGEL, Hans-Jörg, D-61191 Rosbach (DE); NEUMANN, Ulrich, D-64380 Rossdorf (DE); SCHIEL, Lothar, D-65719 Hofheim (DE)
(74) Vertreter: Dusil, Vladimir, Dipl.-Ing.
(86) Internationale Anmeldenummer: EP9403427
(87) Internationale Veröffentlichungsnummer: WO9511147

(56) Entgegenhaltungen:
- EP-A- 0 355 324
- EP-A- 0 395 262
- DE-A- 2 450 874
- DE-A- 4 218 484

## Beschreibung

Die Erfindung betrifft eine Bremsanlage für Kraftfahrzeuge mit einem pedalbetätigbaren Druckgeber, an dem Radbremszylinder von den einzelnen Rädern zugeordneten Radbremsen angeschlossen sind, mit mindestens zwei unabhängig vom Druckgeber ansteuerbaren Betätigungseinheiten, die in den hydraulischen Verbindungen zwischen Druckgeber und Radbremszylindern angeordnet sind, ein Absperren der hydraulischen Verbindungen ermöglichen und durch je eine Zylinder-Kolben-Anordnung und einen Aktuator gebildet sind, sowie mit einem elektronischen Regler, dessen Steuersignale der Ansteuerung der Betätigungseinheiten dienen, wobei bei gleichzeitiger Betätigung des Druckgebers und mindestens einer Betätigungseinheit am Kolben der Zylinder-Kolben-Anordnung eine Addition der aus dem Druckaufbau im Druckgeber resultierenden Kraft und der vom Aktuator aufgebrachten Fremdbetätigungskraft erfolgt.

Eine derartige Bremsanlage ist z. B. aus der europäischen Patentanmeldung EP 0 395 262 A2 bekannt. Bei der vorbekannten Bremsanlage ist die Betätigungseinheit durch einen hydraulischen Zylinder gebildet, dessen Kolben eine Verzahnung aufweist. Mit der Verzahnung wirkt ein Ritzel zusammen, das von einem Elektromotor angetrieben wird und dessen Drehbewegung in eine translatorische Bewegung des Kolbens umgewandelt wird. Weniger vorteilhaft ist bei der vorbekannten Bremsanlage der ungünstige Wirkungsgrad des Aktuators anzusehen, der auf die komplizierte Art der Umwandlung der dem Elektromotor zuzuführenden elektrischen Energie in die Verschiebebewegung des hydraulischen Kolbens zurückzuführen ist. Außerdem können aufgrund der Anordnung des Elektromotors senkrecht zur Längsachse des Zylinders sowie des verhältnismäßig hohen Gewichts erhebliche Probleme bei der Montage bzw. dem Einbau der bekannten Betätigungseinheit entstehen.

Es ist daher Aufgabe der vorliegenden Erfindung, eine Bremsanlage der eingangs genannten Gattung vorzuschlagen, bei der eine Erhöhung des Wirkungsgrades des Aktuators erreichbar ist. Außerdem sollen die Betätigungseinheiten kleine Abmessungen sowie ein niedriges Gewicht aufweisen.

Eine erste Lösung der der Erfindung zugrundeliegenden Aufgabe besteht darin, daß der Aktuator durch einen Elektromagneten gebildet ist, dessen Anker den Kolben der Zylinder-Kolben-Anordnung bildet.

Eine optimale Ausnutzung der Hubarbeit des verwendeten Elektromagneten wird bei einer weiteren vorteilhaften Ausgestaltung der Erfindung dadurch erreicht, daß der Elektromagnet durch einen Hubmagneten gebildet ist, dessen Kraftwirkung hubunabhängig in Abhängigkeit von Ausgangssignalen eines Magnetflußsensors geregelt wird. Alternativ kann die Kraftwirkung des Hubmagneten in Abhängigkeit von Ausgangssignalen eines Differenzdrucksensors geregelt werden, der die Druckdifferenz zwischen dem vom Druckgeber aufgebrachten Druck und dem Ausgangsdruck der Zylinder-Kolben-Anordnung erfaßt.

Eine kompakte, kostengünstig herstellbare Ausführung des Erfindungsgegenstandes sieht vor, daß die Zylinder-Kolben-Anordnung und der Aktuator in einem Gehäuse angeordnet sind.

Bei einer druckdichten Ausführung des Gehäuses ist es sinnvoll, wenn der Kolben als ein auf einem zylindrischen Anschluß abgedichtet geführter Hohlkolben ausgebildet ist und im Gehäuse einen hydraulischen Ringraum begrenzt, der mit dem hydraulischen Druck des Druckgebers beaufschlagbar ist.

Bei nichtdruckdichten Ausführungen des Gehäuses ist der Kolben als ein auf einem zylindrischen Anschluß abgedichtet geführter, gestufter Hohlkolben ausgebildet und begrenzt im Gehäuse einen pneumatischen Ringraum, der mit der dem Ringraum abgewandten Stirnfläche der Stufe größeren Durchmessers in Verbindung steht, wobei die Stufe kleineren Durchmessers im Gehäuse abgedichtet geführt ist und mit dem hydraulischen Druck des Druckgebers beaufschlagbar ist.

Der Stufe kleineren Durchmessers kann ein Filterelement vorgeschaltet sein, das gleichzeitig als Anschlag für den Ventilkörper eines die hydraulische Verbindung zwischen Druckgeber und Radbremsen absperrenden Zentralventils dient.

Eine zweite Lösung der der Erfindung zugrundeliegenden Aufgabe, bei der der Aktuator der Zylinder-Kolben-Anordnung durch eine hydraulische Hilfsdruckquelle gebildet ist, besteht darin, daß die Hilfsdruckquelle durch durch einen Hochdruckspeicher gebildet ist, der vorzugsweise über ein Ladeventil an eine hydraulische Pumpe anschließbar ist, die andererseits über ein Umschalt- bzw. Druckbegrenzungsventil mit dem Druckgeber verbindbar ist. Als hydraulische Pumpe kann dabei eine der im Fahrzeug bereits vorhandenen Pumpen, beispielsweise die ABS- oder die Servolenkungspumpe verwendet werden.

Dabei können sämtliche Zylinder-Kolben-Anordnungen über Trennventile an einen zentral wirkenden Aktuator angeschlossen sein. Bei einer Ausführung, bei der die Trennventile als elektromagnetisch betätigbare, stromlos offene bzw. stromlos geschlossene 2/2-Wegeventile ausgebildet sind, können mit Vorteil kostengünstige ABS-Ventile Verwendung finden.

Eine weitere vorteilhafte Ausführung zeichnet sich dadurch aus, daß sämtliche Zylinder-Kolben-Anordnungen an den Hochdruckspeicher über Druckregelventile anschließbar sind. Durch diese Maßnahme wird erreicht, daß auch bei Änderungen des vom Fahrer im Druckgeber erzeugten Druckes ein konstant bleibender Fremddruck zur Verfügung gestellt wird.

Die Druckregelventile können dabei als elektromagnetisch betätigbare 3/3-Wegeventile ausgebildet sein, die in einer ersten Schaltstellung (Grundstellung) eine Verbindung der Zylinder-Kolben-Anordnungen mit einem drucklosen Druckmittelvorratsbehälter bei gleichzeitiger Trennung des Hochdruckspeichers ermöglichen, in einer zweiten Schaltstellung die Zylinder-Kolben-Anordnungen sowohl vom Hochdruckspeicher als auch vom Druckmittelvorratsbehälter trennen und in einer dritten Schaltstellung eine Verbindung der Zylinder-Kolben-Anordnungen mit dem Hochdruckspeicher bei gleichzeitiger Trennung des Druckmittelvorratsbehälters realisieren.

Eine weitere vorteilhafte Ausgestaltung der Erfindung besteht darin, daß sie ein nach dem Rückförderprinzip arbeitendes hydraulisches Radschlupfregelsystem aufweist, wobei die Betätigungseinheiten vor dem jeweils einem Radbremszyllnder zugeordneten Einlaßventil am Ausgang der Rückförderpumpe angeordnet sind.
Durch die erwähnten Maßnahmen wird gewährleistet, daß in einem ABS-Regelfall der Fremdbremsdruck automatisch mit geregelt wird.

Um bereits vorhandene blockiergeschützte Bremsanlagen zu Fahrstabilitätsregelungszwecken verwenden zu können, sieht eine andere Weiterbildung des Erfindungsgegenstandes vor, daß die Betätigungseinheiten zwischen dem jeweils einem Radbremszylinder zugeordneten Einlaßventil und dem zugehörigen Radbremszylinder angeordnet sind.

Um ein Blockieren durch Erzeugen des Fremddruckes zu verhindern, ist es dabei erforderlich, daß der die Betätigungseinheiten ansteuernde Regler (FSR-Regler) von Ausgangssignalen des ABS/ASR-Reglers beeinflußbar ist.

Außerdem ist es insbesondere bei ABS-Regelsystemen, die einen sowohl die ABS-Ventile als auch die Rückförderpumpe aufnehmenden Ventilblock aufweisen, sinnvoll, wenn die Betätigungseinheiten im Ventilblock integriert sind.

Die Erfindung wird in der nachfolgenden Beschreibung an vier Ausführungsbeispielen im Zusammenhang mit der beiliegenden Zeichnung näher erläutert. In der Zeichnung zeigt:
- Fig. 1: ein hydraulisches vereinfachtes Schaltbild einer ersten Ausführung der erfindungsgemäßen Bremsanlage;
- Fig. 2: eine erste Ausführung von bei der Bremsanlage nach Fig. 1 verwendbaren Betätigungseinheiten;
- Fig. 3: eine zweite Ausführung von bei der Bremsanlage nach Fig. 1 verwendbaren Betätigungseinheiten;
- Fig. 4: eine dritte Ausführung von bei der Bremsanlage nach Fig. 1 verwendbaren Betätigungseinheiten;
- Fig. 5: ein hydraulisches Schaltbild einer zweiten Ausführung der erfindungsgemäßen Bremsanlage;
- Fig. 6: eine Ausführung von bei der Bremsanlage nach Fig. 5 verwendbaren Betätigungseinheiten;
- Fig. 7: ein hydraulisches Schaltbild einer dritten Ausführung der erfindungsgemäßen Bremsanlage und
- Fig. 8: ein hydraulisches Schaltbild einer vierten Ausführung der erfindungsgemäßen Bremsanlage.

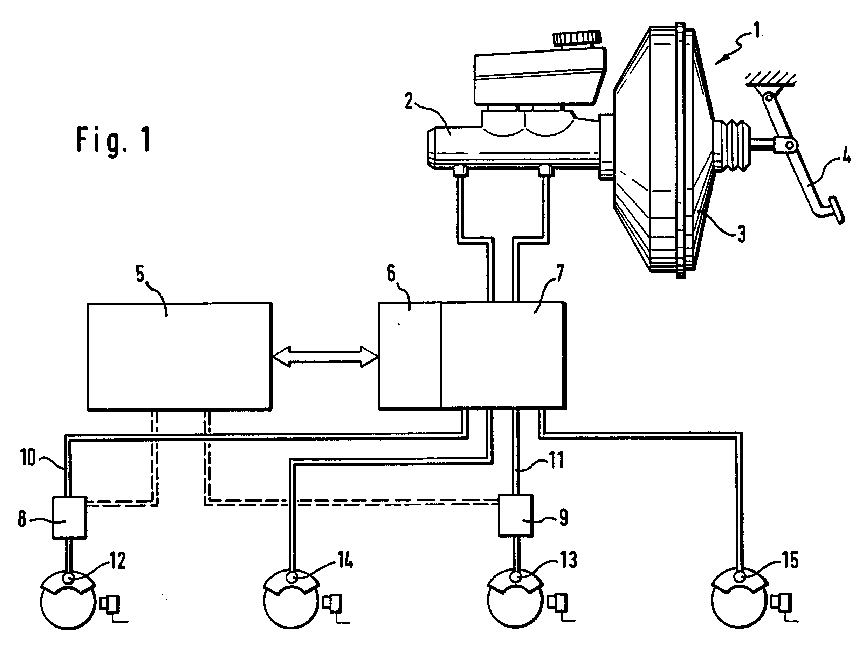

Die in Fig. 1 gezeigte erfindungsgemäße Bremsanlage für Kraftfahrzeuge besteht im wesentlichen aus einem Druckgeber 1, einem lediglich schematisch angedeuteten Hydroaggregat 7, das zusammen mit einem ersten elektronischen Regler (ABS/ASR-Regler6) ein Antiblockiersystem bildet, Radbremsen bzw. Radbremszylindern 12,13,14,15, unabhängig vom Druckgeber 1 ansteuerbaren bzw. fremdbetätigbaren Betätigungseinheiten 8,9 sowie einem mit dem ABS/ASR-Regler 6 zusammenwirkenden zweiten elektronischen Regler (FSR-Regler 5), dessen Steuersignale der Ansteuerung der Betätigungseinheiten 8,9 dienen. Jedem der nicht gezeigten Fahrzeugräder ist je ein näher nicht bezeichneter Radsensor zugeordnet, dessen der Radgeschwindigkeit entsprechendes Steuersignal dem ABS/ASR-Regler 6 zugeführt wird. Die Zuordnung der Radbremszylinder 12 bis 15 ist dabei vorzugsweise derart getroffen, daß die Radbremszylinder 12,13 einer Fahrzeugachse, ggf. der angetriebenen Vorderachse und die Radbremszylinder 14,15 der anderen, ggf. der nicht angetriebenen Hinterachse des Kraftfahrzeuges zugeordnet sind. Die Betätigungseinheiten 8,9 sind dabei in zu den Radbremszylindern 12,13 führenden hydraulischen Leitungen 10 und 11 so eingefügt, daß sie deren Absperren ermöglichen. Der Druckgeber 1 besteht seinerseits aus einem mittels eines Betätigungs- bzw. Bremspedals 4 betätigbaren pneumatischen Bremskraftverstärker, vorzugsweise einem Unterdruckbremskraftverstärker 3, dem ein zweikreisiger Hauptbremszylinder, vorzugsweise ein Tandemhauptzylinder 2, nachgeschaltet ist, der mit dem Hydroaggregat 7 in Verbindung steht.

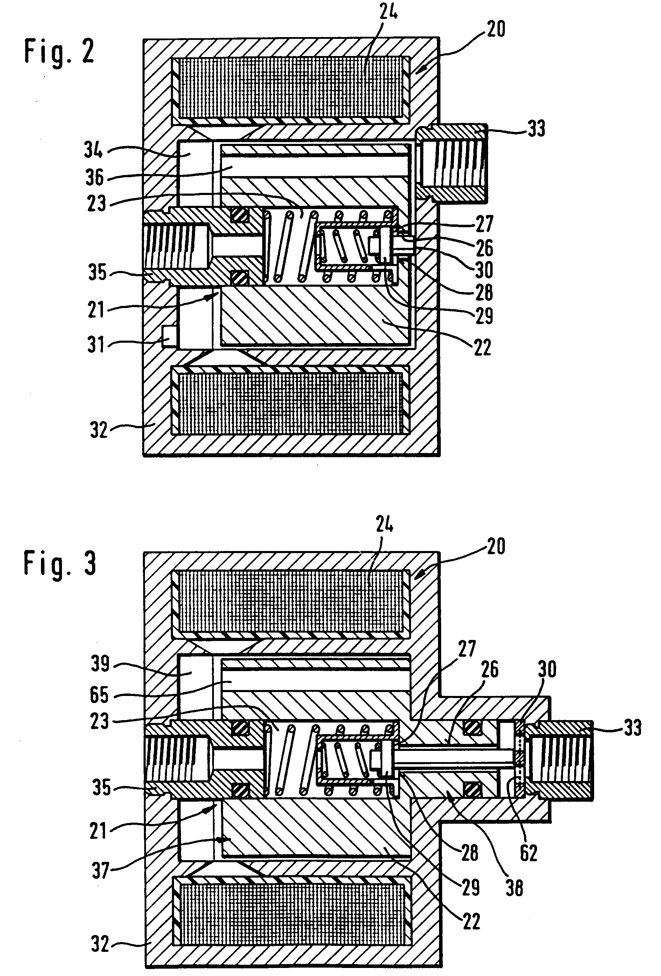

Wie insbesondere Fig. 2, 3 und 4 zeigen, bestehen die Betätigungseinheiten 8,9 aus je einer hydraulischen Zylinder-Kolben-Anordnung 21, der wirkungsmäßig je ein Aktuator 20 vorgeschaltet ist und der deren Fremdbetätigung ermöglicht. Die in Fig. 2 dargestellte Betätigungseinheit weist ein Gehäuse 32 auf, das mit einem ersten (Eingangs-) Anschluß 33 sowie einem zweiten (Ausgangs-) Anschluß 35 versehen ist. Im Inneren des Gehäuses 32 ist ein hydraulischer Kolben 22 axial verschiebbar angeordnet, der als Ringkolben ausgebildet auf dem Ausgangsanschluß 35 abgedichtet geführt ist und in seinem Inneren einen Druckraum 23 aufweist. Der Druckraum 23 steht über eine in der dem Eingangsanschluß 33 zugewandten Stirnfläche des Kolbens 22 vorgesehene Bohrung 26 mit dem Eingangsanschluß 33 in Verbindung, wobei die Bohrung 26 mittels eines Zentralventils 27 absperrbar ist. Das Zentralventil 27 besteht aus einem am Kolben 22 ausgebildeten, vorzugsweise ringförmigen Dichtsitz 28 sowie einem mit ihm zusammenwirkenden, federnd in Schließrichtung vorgespannten Ventilkörper 29, der in der Ruhestellung des Kolbens 22 durch axiale Anlage an einem gehäusefesten Anschlag 30 im Abstand vom Dichtsitz 28 gehalten wird, so daß eine hydraulische Verbindung zwischen Eingangs-(33) und Ausgangsanschluß 35 besteht. Außerdem begrenzt der Kolben 22 im Gehäuse einen Ringraum 34, der mittels einer im Kolben 22 ausgebildeten Bohrung 36 mit dem Eingangsanschluß 33 bzw. der dem Eingangsanschluß 33 zugewandten Stirnfläche des Kolbens 22 in Verbindung steht, so daß bei schneller Betätigung ein Druckausgleich zwischen dem Ringraum 34 und dem Eingangsanschluß 33 stattfinden kann. Der erwähnte Anschlag 30 wird dabei durch den dem Ventilkörper 29 axial gegenüberliegenden Bereich des Gehäuses 32 gebildet.

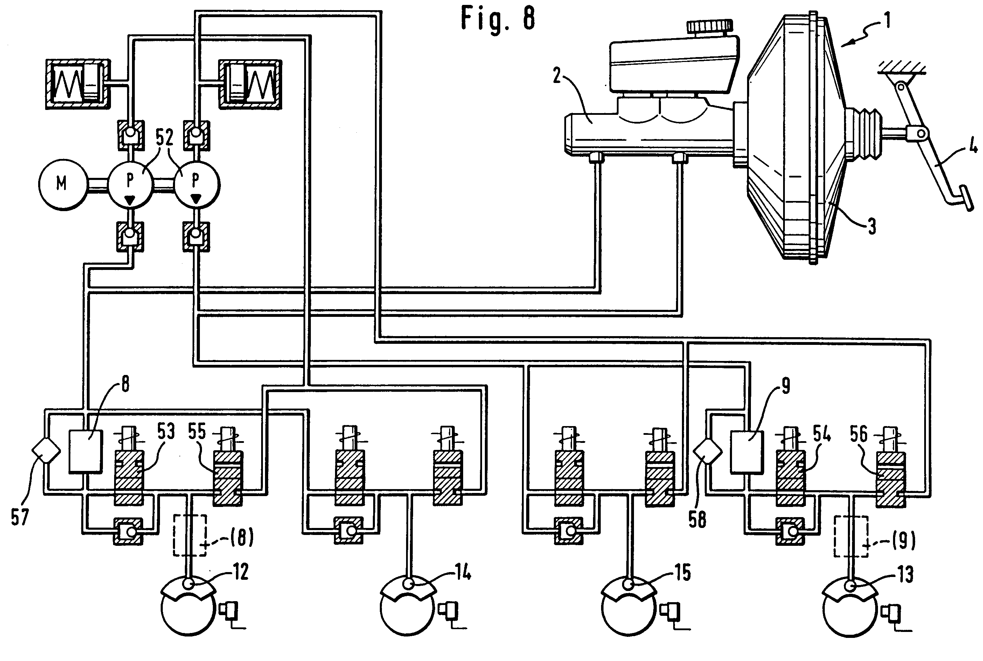

Der Aktuator 20 der in Fig. 2 bis 4 dargestellten Betätigungseinheiten ist koaxial zur Kolben-Zylinder-Anordnung 21 angeordnet und besteht aus einem Elektromagneten 24, dessen Anker durch den Kolben 22 gebildet wird. Der Elektromagnet 24 kann dabei als Hubmagnet ausgeführt sein, wobei im Gehäuse 32 ein den Magnetfluß des Elektromagneten 24 erfassender Sensor, beispielsweise ein Hallsensor 31, dem Kolben 22 axial gegenüberliegend angeordnet ist. Die Ausgangssignale des Hallsensors 31 werden dem FSR-Regler 5 zugeführt, der hubunabhängig die Kraftwirkung des Elektromagneten 24 regelt. Eine andere Möglichkeit besteht darin, die Kraftwirkung des Elektromagneten 24 in Abhängigkeit von Ausgangssignalen eines Differenzdrucksensors 57,58 (Fig. 8) zu regeln, der die Druckdifferenz zwischen dem Ein- und Ausgangsdruck der Betätigungseinheit 8,9 erfaßt.

Die Anordnung des Aktuators 20 der in Fig. 3 dargestellten Betätigungseinheit entspricht identisch der im Zusammenhang mit Fig. 2 beschriebenen Ausführung. Der Kolben 22 ist bei der in Fig. 3 gezeigten Variante als ein Stufenkolben ausgeführt, dessen Stufe 37 größeren Durchmessers auf dem zylindrischen Ausgangsanschluß 35 abgedichtet geführt ist, während die Stufe 38 kleineren Durchmessers im Gehäuse 32 abgedichtet geführt und dem Eingangsanschluß 33 axial gegenüberliegend angeordnet ist, so daß sie mit dem im Bremsdruckgeber 1 erzeugten hydraulischen Druck beaufschlagbar ist. Die Stufe 37 größeren Druchmessers begrenzt im Gehäuse 32 einen pneumatischen Ringraum 39, der mittels einer im Kolben 22 parallel zu dessen Achse verlaufenden Bohrung 65 mit der dem Eingangsanschluß 33 zugewandten Stirnfläche der Stufe 37 in Verbindung steht, so daß bei der Ansteuerung der Betätigungseinheit ein pneumatischer Druckausgleich zwischen dem Ringraum 39 und dem durch die dem Eingangsanschluß 33 zugewandten Stirnseite begrenzten pneumatischen Raum stattfinden kann.

Um ein Eindringen von Schmutzpartikeln in den Bereich des Zentralventils 27 wirksam zu verhindern, ist der Stufe 38 kleineren Durchmessers ein Filterelement 62 vorgeschaltet, an dem in der Ruhestellung der Ventilkörper 29 axial anliegt und der somit als der oben erwähnte gehäusefeste Anschlag 30 dient.

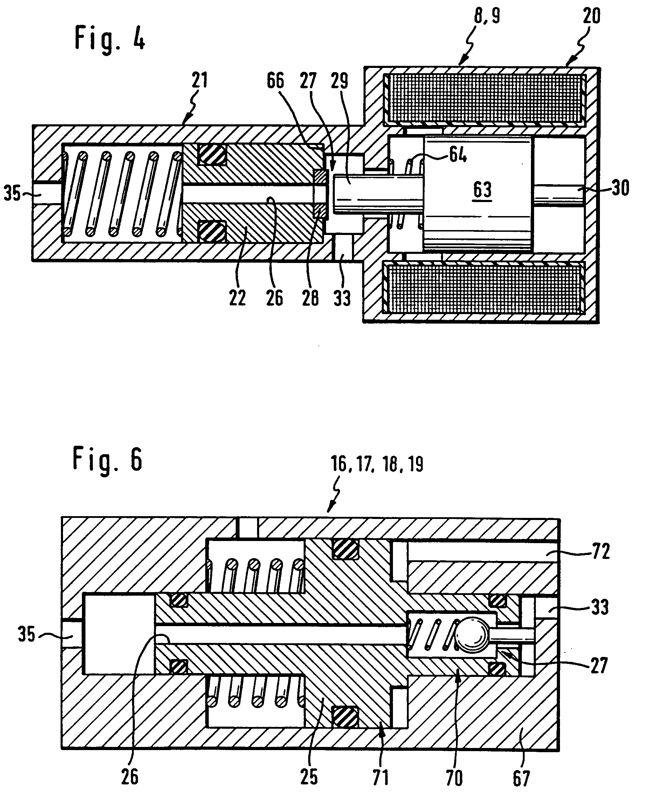

Bei der in Fig. 4 gezeigten elektrohydraulischen Betätigungseinheit ist der Ventilkörper 29 des Zentralventils 27 schließlich durch eine axiale Verlängerung des Ankers 63 des Elektromagneten 24 gebildet, der mittels einer Druckfeder 64 entgegen der Schließrichtung des Zentralventils 27 vorgespannt ist. Der Eingangsanschluß 33 ist bei der dargestellten Ausführung senkrecht zur Längsachse der Zylinder-Kolben-Anordnung 21 ausgebildet, während der Ausgangsanschluß 35 koaxial zum Kolben 22 angeordnet ist, der in Ruhestellung durch Anlage an einer im Gehäuse 32 ausgebildeten Ringfläche 66 positioniert ist.

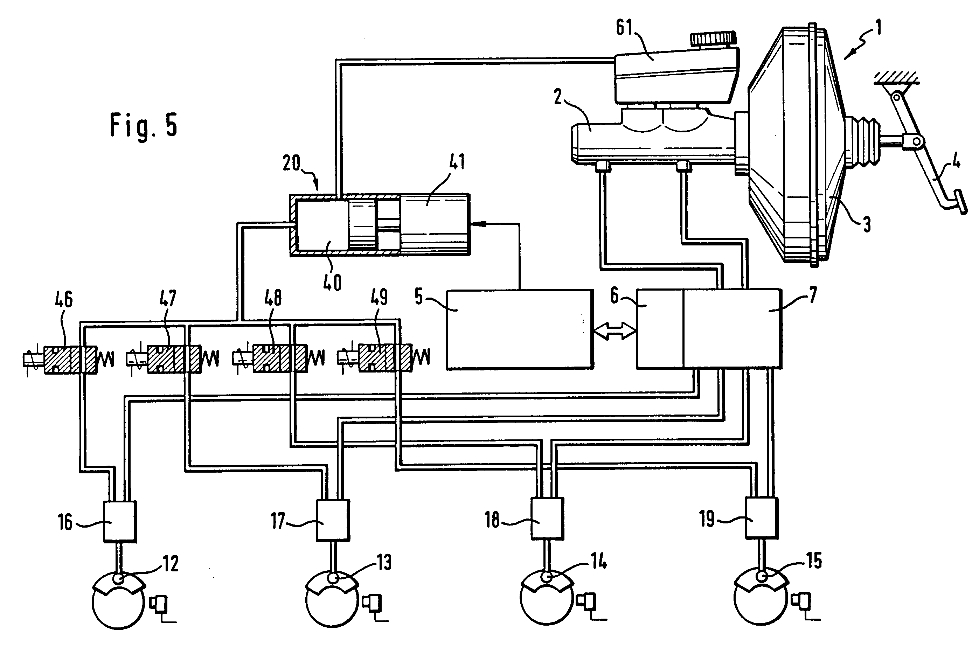

Bei der in Fig. 5 dargestellten erfindungsgemäßen Bremsanlage finden hydraulisch betätigbare Zylinder-Kolben-Anordnungen 16,17,18,19 Verwendung, die den einzelnen Radbremszylindern 12,13,14,15 vorgeschaltet und von einer gemeinsamen hydraulischen Hilfsdruckquelle ansteuerbar sind. Die Hilfsdruckquelle besteht aus einer elektrischen Antriebseinheit 41, beispielsweise einem elektromotorisch betätigbaren Spindel-Mutter-Antrieb, dem wirkungsmäßig ein Hilfszylinder 40 nachgeschaltet ist. Die einzelnen Zylinder-Kolben-Anordnungen 16 bis 19 sind an den Hilfszylinder 40 mittels Trennventile 46,47,48,49 angeschlossen, die vorzugsweise als elektromagnetisch betätigbare, stromlos offene (SO) bzw. stromlos geschlossene (SG) 2/2-Wegeventile ausgeführt sind. Sowohl die Trennventile 46,47,48,49 als auch die Antriebseinheit 41 werden mit Steuersignalen des FSR-Regelers 5 angesteuert.

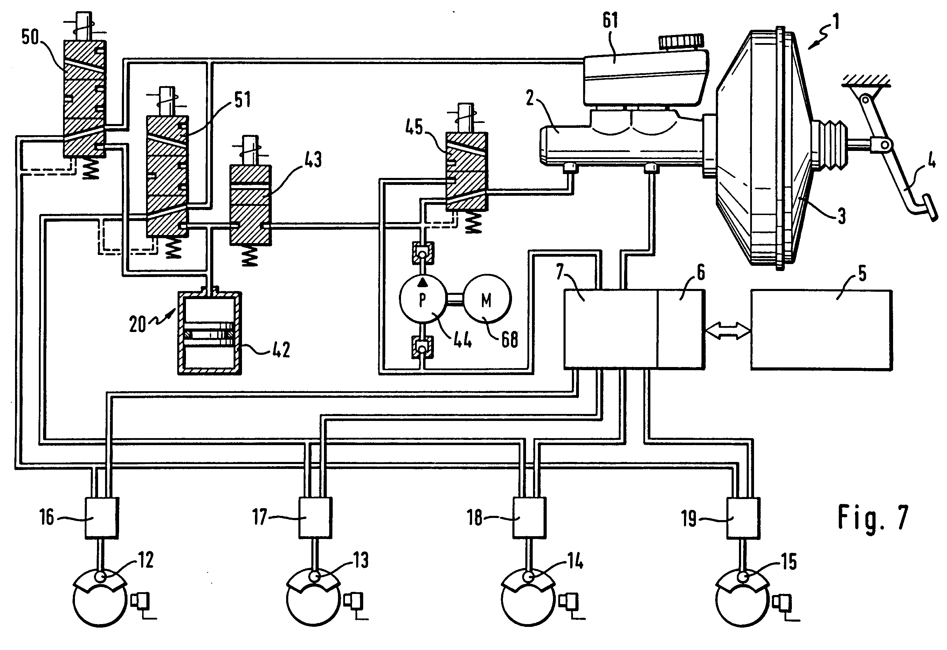

Fig. 6 zeigt eine der vorhin erwähnten, hydraulisch betätigbaren Zylinder-Kolben-Anordnungen 16 bis 19 im Axialschnitt. Die dargestellte Anordnung weist einen in einem Gehäuse 67 abgedichtet verschiebbar geführten Stufenkolben 25 auf, dessen Stufe 70 kleineren Durchmessers mit dem im Druckgeber 1 erzeugten Druck beaufschlagbar ist, während der Stufe 71 größeren Durchmessers bzw. deren Stirnfläche mittels eines dritten hydraulischen Anschlusses 72 der von der Hilfsdruckquelle erzeugte Fremddruck zugeführt wird.

Bei der in Fig. 7 dargestellten erfindungsgemäßen Bremsanlage besteht die hydraulische Hilfsdruckquelle aus einem Hochdruckspeicher 42, der über ein Ladeventil 43 an eine mittels eines Elektromotors 68 antreibbare Pumpe 44 angeschlossen ist, die andererseits unter Zwischenschaltung eines Umschalt- bzw. Druckbegrenzungsventils 45 mit dem Druckgeber 1 bzw. dem Tandemhauptzylinder 2 in Verbindung steht. An ihrer Saugsseite ist die Pumpe 44 an das lediglich schematisch dargestellte Hydroaggregat 7 des Antiblockiersystems angeschlossen. Das durch Steuersignale des FSR-Reglers 5 ansteuerbare Ladeventil 43 ist dabei als elektromagnetisch betätigbares, vorzugsweise stromlos geschlossenes 2/2-Wegeventil ausgebildet, während das Umschalt- bzw. Druckbegrenzungsventil 45, das insbesondere bei ASR-Regelvorgängen Verwendung findet, als elektromagnetisch betätigbares 3/2-Wegeventil ausgeführt ist, das in seiner zweiten Schaltstellung die Pumpe 44 vom Tandemhauptzylinder 2 trennt und eine Verbindung zwischen dem Tandemhauptzylinder 2 und dem Hydroaggregat 7 herstellt. Die im Zusammenhang mit Fig. 5 und 6 erwähnten Zylinder-Kolben-Anordnungen 16,17,18,19 sind an den Hochdruckspeicher 42 paarweise über Druckregelventile 50,51 angeschlossen, die als elektromagnetisch betätigbare 3/2-Wegeventile ausgebildet sind. In einer ersten Schaltstellung bzw. dem stromlosen Zustand entsprechenden Grundstellung der Druckregelventile 50,51 stehen die Zylinder-Kolben-Anordnungen 16 bis 19 in Verbindung mit einem dem Tandemhauptzylinder 2 zugeordneten Druckmittelvorratsbehälter 61, während sie vom Hochdruckspeicher 42 getrennt sind. In einer zweiten Schaltstellung sind die Zylinder-Kolben-Anordnungen 16,17,18,19 sowohl vom Druckmittelvorratsbehälter 61 als auch vom Hochdruckspeicher 42 getrennt, während sie in einer dritten Schaltstellung mit dem Hochdruckspeicher 42 in Verbindung stehen und vom Druckmittelvorratsbehälter 61 getrennt sind.

Fig. 8 zeigt schließlich eine stark vereinfachte Kombination der erfindungsgemäßen Bremsanlage mit einem nach dem Rückförderprinzip arbeitenden Antiblockier- bzw. Radschlupfregelsystem, wobei in der Darstellung der besseren Übersichtlichkeit halber beide Regler 5,6 weggelassen wurden. Bei der gezeigten Ausführung kommen elektromagnetisch betätigbare Betätigungseinheiten 8,9 zum Einsatz, die in Fig. 2 bis 4 gezeigt sind und die den der angetriebenen Vorderachse zugeordneten Radbremszylindern 12,13 vorgeschaltet sind. Um in einem Antiblockierregelfall eine Druckmodulation an den einzelnen Radbremszylindern 12 bis 15 zurückführen zu können, sind Ein- und Auslaßventile vorgesehen, wobei die den Radbremszylindern 12 und 13 der angetriebenen Vorderachse vorgeschalteten Einlaßventile mit den Bezugszeichen 53 und 54 und die entsprechenden Auslaßventile mit den Bezugszeichen 55 und 56 versehen sind. Die erwähnten Betätigungseinheiten 8,9 sind dabei vor den Einlaßventilen 53,54 am Ausgang des Druckgebers 1 bzw. einer Rückförderpumpe 52 geschaltet. Der nicht gezeigte Aktuator der Betätigungseinheit 8,9 ist vorzugsweise durch einen Hubmagneten gebildet, dessen Kraftwirkung hubunabhängig in Abhängigkeit von Steuersignalen von den Betätigungseinheiten 8,9 parallel geschalteten Differenzdrucksensoren 57,58 geregelt wird, die die Druckdifferenz zwischen dem durch den Druckgeber 1 bzw. die Rückförderpumpe 52 erzeugten Eingangsdruck und dem Ausgangsdruck der Betätigungseinheit 8,9 erfassen.

Eine weitere Möglichkeit der Anordnung der Betätigungseinheiten zwischen dem Einlaßventil 53,54 und dem Radbremszylinder 12,13 ist in Fig. 8 gestrichelt dargestellt.

Die zum vorhin erwähnten Hydroaggregat gehörenden Ein- und Auslaßventile 53,54,55,56, die der anderen Fahrzeugachse zugeordneten Ein- und Auslaßventile sowie die Rückförderpumpe 52 sind bei neueren Radschlupfregelsystemen in einem Ventilblock untergebracht. Es ist daher sinnvoll, die Betätigungseinheiten 8,9 im Ventilblock zu integrieren.

Bei einer Normalbremsung können in den Radbremszylindern 12,13 sowohl ein Druckauf- als auch ein Druckabbau durch Betätigung des Druckgebers 1 über die offene Verbindung (Bohrung 26 Fig. 2 bis Fig 4, Fig. 6) sowie die offenen Einlaßventile 53,54 (Fig. 8) erfolgen, so daß kein Unterschied zu bisherigen Bremssystemen auftritt.

Bei einer Fahrstabilitäts-Regelbremsung wirkt die elektrisch (Fig. 1, 2 bis 4, 8) oder hydraulisch (Fig. 5, 6, 7) steuerbare Fremdkraft auf den Kolben 22 bzw. 25 der Zylinder-Kolben-Anordnung und bewegt ihn in Betätigungsrichtung der Radbremszylinder 12,13 bzw. 12 bis 15. Hierdurch wird das Zentralventil 27 geschlossen und die auf den Kolben 22 bzw. 25 wirkende Kraft erzeugt in der Radbremse einen entsprechenden Druck. Bei elektromagnetischen Aktuatoren, die als Hubmagneten ausgebildet sind, ist dabei wichtig, daß die Fremdkraft hubunabhängig aufgebracht werden muß, da sonst bei zusätzlicher Bremsaktivität des Fahrers der Fremdbremsanteil sich ändert. Dies kann z. B. mit Proportionalmagneten oder Schaltmagneten mit geregelter Flußdichte erreicht werden. Die erforderliche Hubarbeit ist dabei dadurch eingrenzbar, daß nur jeweils ein Rad gebremst wird und die maximale Fremdbetätigungskraft auf einen Wert unterhalb des Blockierdruckwertes beschränkt werden kann. Bei Verwendung eines Elektromotors mit Spindel-Mutter-Antrieb ist darauf zu achten, daß keine Selbsthemmung auftritt.

Bei dem in Fig. 6 gezeigten Druck-/Druckadditionsmodul wirkt die Fremdkraft als hydraulisch erzeugte Druckkraft auf die Ringfläche der Stufe 71 größeren Durchmessers, die durch eine Dichtung von der Stirnfläche der Stufe 70 kleineren Druchmessers getrennt ist. Der Kolben 25 kann auch als Gleichlaufkolben ausgebildet sein, wobei das Übersetzungsverhältnis zwischen Tandemhauptzylinder 2 und Radbremszylindern 12 bis 15 erhalten bleibt, Bei der letztgenannten Lösung ist auch eine Reduzierung der vom Fahrer aufgebrachten Betätigungskraft an dem dem fremdgebremsten Rad gegenüberliegenden Rad denkbar.

Wird gleichzeitig mit einer FSR-Regelbremsung eine Fahrerbremsbetätigung eingeleitet, so wird im durch das Zentralventil 27 abgesperrten Druckraum 23 der durch die Fremdbetätigung erzeugte Druck unmittelbar um den auf die entsprechende Kolbenfläche wirkenden, vom Fahrer erzeugten Bremsdruck erhöht. Hierbei bewegt sich der Kolben 22, 25 um den für die Druckerhöhung notwendigen Betrag in Richtung Radbremszylinder 12 bis 15. Damit entspricht die Volumenentnahme aus dem Tandemhauptzylinder 2 der gewohnten Verzögerungserhöhung. Die Druckdifferenz am Kolben 22, 25 bleibt erhalten und entspricht der Fremdbremskraft. Das Rückschlagventil 27 bleibt geschlossen.

Tritt ein kritischer Radschlupfzustand auf, so wird je nach Regelphilosophie und Erfordernis entweder erst nur das Antiblockiersystem für die hydraulische Bremse aktiviert und dann die Fremdkraft zurückgenommen oder beides gleichzeitig oder umgekehrt. Um eine gewohnte Rückwirkung auf den Fahrerfuß zu erhalten, wird die Aktivierung des Standard-ABS sinnvoll sein.

Das Lösen bei der Normalbremsung erfolgt unmittelbar. Die Fremdbremsung bleibt erhalten, solange sie aktiviert ist.

Erfolgt zuerst die Aktivierung der Fremdbremsung, so wird der vorgespannte Kolben 22,25 in seine Ausgangsposition zurückgeschoben, da das Rückschlagventil 27 sich öffnet.

Schließt eine FSR-Bremsung an eine vom Fahrer eingeleitete Normalbremsung an, durch die die Radbremszylinder 12 bis 15 über die offene hydraulische Verbindung (Bohrung 26) vorgefüllt wurden, so führt die Kraftwirkung der Fremdbremsung zum Schließen des Zentralventils 27 und zur Erhöhung des Radbremsdruckes. Erfolgt nun eine Reduzierung des Fahrerdrucks, so bewegt sich der Kolben 22, 25 entgegen der Betätigungsrichtung der Radbremszylinder und der darin herrschende Druck wird ebenso reduziert. Ist das Lösen der Bremse betragsmäßig größer als der Fremdbremsanteil, so "schnüffelt" das Zentralventil 27 in seiner Schließposition und das Volumen wird aus den Radbremszylindern wieder zum Tandemhauptzylinder 2 abgeführt.

Die ASR-Funktion wird mit den gleichen Maßnahmen dargestellt, wie die FSR-Funktion. Die Überlagerung erfolgt somit elektronisch und ist hydraulisch unproblematisch.

Um den Aufwand beim elektrischen Aktuator gering zu halten, empfiehlt sich möglicherweise eine Zwei-Kanal-Anlage, bei der der Aktuator wahlweise je nach Ventilstellung hydraulisch auf eine rechte oder linke Radbremse wirken kann. Damit ist nur die Hubarbeit einer Radbremse zu leisten. Die Ventile können als zwei SO-Ventile oder ein 3/2-Wegeventil ausgebildet sein. Sollten keine besoderen Anforderungen an die Fremdkraftverteilung vorn/hinten gestellt werden, so können mit einem entsprechend verstärkten Aktuator die beiden Radbremsen auf der Fahrer- oder auf der Beifahrerseite zentral betätigt werden. Bei vollkommen unabhängig von der Normalbremse wirkenden Fremdbremse kann die Fremdbremsaufteilung seitenweise erfolgen.

### Bezugszeichenliste

- 1: Druckgeber
- 2: Hauptbremszylinder
- 3: Unterdruckbremskraftverstärker
- 4: Betätigungspedal
- 5: FSR-Regler
- 6: ABS/ASR-Regler
- 7: Hydroaggregat
- 8: Betätigungseinheit
- 9: Betätigungseinheit
- 10: Leitung
- 11: Leitung
- 12: Radbremszylinder
- 13: Radbremszylinder
- 14: Radbremszylinder
- 15: Radbremszylinder
- 16: Zylinder-Kolben-Anordnung
- 17: Zylinder-Kolben-Anordnung
- 18: Zylinder-Kolben-Anordnung
- 19: Zylinder-Kolben-Anordnung
- 20: Aktuator
- 21: Zylinder-Kolben-Anordnung
- 22: Kolben
- 23: Druckraum
- 24: Elektromagnet
- 25: Kolben
- 26: Bohrung
- 27: Zentralventil
- 28: Dichtsitz
- 29: Ventilkörper
- 30: Anschlag
- 31: Hallsensor
- 32: Gehäuse
- 33: Anschluß (Eingangsanschluß)
- 34: Ringraum
- 35: Ausgangsanschluß
- 36: Bohrung
- 37: Stufe
- 38: Stufe
- 39: Ringraum
- 40: Hilfszylinder
- 41: Antriebseinheit
- 42: Hochdruckspeicher
- 43: Ladeventil
- 44: Pumpe
- 45: Druckbgrenzungsventil
- 46: Trennventil
- 47: Trennventil
- 48: Trennventil
- 49: Trennventil
- 50: Trennventil, Druckregelventil
- 51: Trennventil, Druckregelventil
- 52: Rückförderpumpe
- 53: Einlaßventil
- 54: Einlaßventil
- 55: Auslaßventil
- 56: Auslaßventil
- 57: Differenzdrucksensor
- 58: Differenzdrucksensor
- 60: -
- 61: Druckmittelvorratsbehälter
- 62: Filterelement
- 63: Anker
- 64: Druckfeder
- 65: Bohrung
- 66: Ringfläche
- 67: Gehäuse
- 68: Elektromotor
- 69:
- 70: Stufe
- 71: Stufe
- 72: Anschluß

## Patentansprüche

1. Bremsanlage für Kraftfahrzeuge mit einem pedalbetätigbaren Druckgeber (1), an den Radbremszylinder (12,13,14,15) von den einzelnen Rädern zugeordneten Radbremsen angeschlossen sind, mit mindestens zwei unabhängig vom Druckgeber (1) ansteuerbaren Betätigungseinheiten (8,9), die in den hydraulischen Verbindungen (10,11) zwischen Druckgeber (1) und Radbremszylindern (12,13) angeordnet sind, ein Absperren der hydraulischen Verbindungen (10,11) ermöglichen und durch je eine Zylinder-Kolben-Anordnung (21) und einen Aktuator (20) gebildet sind, sowie mit einem elektronischen Regler (FSR-Regler) (6), dessen Steuersignale der Ansteuerung der Betätigungseinheiten (8,9) dienen, wobei bei gleichzeitiger Betätigung des Druckgebers (1) und mindestens einer Betätigungseinheit (8,9) am Kolben (22,25) der Zylinder-Kolben-Anordnung (21,16,17,18,19) eine Addition der aus dem Druckaufbau im Druckgeber (1) resultierenden Kraft und der vom Aktuator (20) aufgebrachten Fremdbetätigungskraft erfolgt, dadurch **gekennzeichnet**, daß der Aktuator (20) durch einen Elektromagneten (24) gebildet ist, dessen Anker den Kolben (22) bildet.

2. Bremsanlage nach Anspruch 1 dadurch **gekennzeichnet**, daß der Elektromagnet (24) durch einen Hubmagneten gebildet ist, dessen Kraftwirkung hubunabhängig in Abhängigkeit von Ausgangssignalen eines Magnetflußsensors (Hallsensor 31) geregelt wird.

3. Bremsanlage nach Anspruch 1 dadurch **gekennzeichnet**, daß der Elektromagnet (24) durch einen Hubmagneten gebildet ist, dessen Kraftwirkung hubunabhängig in Abhängigkeit von Ausgangssignalen eines Differenzdrucksensors (57,58) geregelt wird, der die Druckdifferenz zwischen dem Eingangs- und dem Ausgangsdruck der Betätigungseinheit (8,9) erfaßt.

4. Bremsanlage nach Anspruch 1, dadurch **gekennzeichnet**, daß die Zylinder-Kolben-Anordnung (21) und der Aktuator (20 bzw. 24) in einem Gehäuse (32) angeordnet sind.

5. Bremsanlage nach Anspruch 4, dadurch **gekennzeichnet**, daß der Kolben (22) als ein auf einem zylindrischen Ausgangsanschluß (35) abgedichtet geführter Hohlkolben ausgebildet ist und im Gehäuse (32) einen hydraulischen Ringraum (34) begrenzt, der mit dem hydraulischen Druck des Druckgebers (1) beaufschlagbar ist.

6. Bremsanlage nach Anspruch 4, dadurch **gekennzeichnet**, daß der Kolben (22) als ein auf einem zylindrischen Ausgangsanschluß (35) abgedichtet geführter, gestufter Hohlkolben ausgebildet ist und im Gehäuse (32) einen pneumatischen Ringraum (39) begrenzt, der mit der ihm abgewandten Stirnfläche der Stufe (37) größeren Durchmessers in Verbindung steht, wobei die Stufe (38) kleineren Durchmessers im Gehäuse (32) abgedichtet geführt ist und mit dem hydraulischen Druck des Druckgebers (1) beaufschlagbar ist.

7. Bremsanlage nach Anspruch 6, dadurch **gekennzeichnet**, daß der Stufe (38) kleineren Durchmessers ein Filterelement (62) vorgeschaltet ist, das gleichzeitig als Anschlag (30) für den Ventilkörper (29) eines die hydraulische Verbindung zwischen Druckgeber (1)und Radbremsen (12,13,14,15) absperrenden Zentralventils (27) dient.

8. Bremsanlage für Kraftfahrzeuge mit einem pedalbetätigbaren Druckgeber (1), an den Radbremszylinder (12,13,14,15) von den einzelnen Rädern zugeordneten Radbremsen angeschlossen sind, mit mindestens zwei unabhängig vom Druckgeber (1) ansteuerbaren Betätigungseinheiten (8,9), die in den hydraulischen Verbindungen (10,11) zwischen Druckgeber (1) und Radbremszylindern (12,13) angeordnet sind, ein Absperren der hydraulischen Verbindungen (10,11) ermöglichen und durch je eine Zylinder-Kolben-Anordnung (21) und einen Aktuator (20) gebildet sind, sowie mit einem elektronischen Regler (FSR-Regler) (6), dessen Steuersignale der Ansteuerung der Betätigungseinheiten (8,9) dienen, wobei bei gleichzeitiger Betätigung des Druckgebers (1) und mindestens einer Betätigungseinheit (8,9) am Kolben (25) der Zylinder-Kolben-Anordnung (16,17,18,19) eine Addition der aus dem Druckaufbau im Druckgeber (1) resultierenden Kraft und der vom Aktuator (20) aufgebrachten Fremdbetätigungskraft erfolgt, und wobei der Aktuator (20) durch eine hydraulische Hilfsdruckquelle gebildet ist, dadurch **gekennzeichnet**, daß die Hilfsdruckqueile durch einen Hochdruckspeicher (42) gebildet ist.

9. Bremsanlage nach Anspruch 8, dadurch **gekennzeichnet**, daß der Hochdruckspeicher (42) über ein Ladeventil (43) an eine hydraulische Pumpe (44) anschließbar ist, die andererseits über ein Umschalt- bzw. Druckbegrenzungsventil (45) mit dem Druckgeber (1) verbindbar ist.

10. Bremsanlage nach Anspruch 8 oder 9, dadurch **gekennzeichnet**, daß sämtliche Zylinder-Kolben-Anordnungen (16,17,18,19) über Trennventile (46,47,48,49,50,51) an einen zentral wirkenden Aktuator (20) angeschlossen sind.

11. Bremsanlage nach Anspruch 10, dadurch **gekennzeichnet**, daß die Trennventile (46,47,48,49) als elektromagnetisch betätigbare, stromlos offene bzw. stromlos geschlossene 2/2-Wegeventile ausgebildet sind.

12. Bremsanlage nach Anspruch 8 oder 9, dadurch **gekennzeichnet**, daß sämtliche Zylinder-Kolben-Anordnungen (16,17,18,19) an den Hochdruckspeicher (42) über Druckregelventile (50,51) anschließbar sind.

13. Bremsanlage nach Anspruch 12, dadurch **gekennzeichnet**, daß die Druckregelventile (50,51) als elektromagnetisch betätigbare 3/3-Wegeventile ausgebildet sind, die in einer ersten Schaltstellung (Grundstellung) eine Verbindung der Zylinder-Kolben-Anordnungen (16,17,18,19) mit einem drucklosen Druckmittelvorratsbehälter (61) bei gleichzeitiger Trennung des Hochdruckspeichers (42) ermöglichen, in einer zweiten Schaltstellung die Zylinder-Kolben-Anordnungen (16,17,18,19) sowohl vom Hochdruckspeicher (42) als auch vom Druckmittelvorratsbehälter (61) trennen und in einer dritten Schaltstellung eine Verbindung der Zylinder-Kolben-Anordnungen (16,17,18,19) mit dem Hochdruckspeicher (42) bei gleichzeitiger Trennung des Druckmittelvorratsbehälters (61) realisieren.

14. Bremsanlage nach einem der Ansprüche 1 bis 13, dadurch **gekennzeichnet**, daß sie ein nach dem Rückförderprinzip arbeitendes hydraulisches Radschlupfregelsystem aufweist, wobei die Betätigungseinheiten (8,9) vor dem jeweils einem Radbremszylinder (12,13) zugeordneten Einlaßventil (53,54) am Ausgang der Rückförderpumpe (52) angeordnet sind.

15. Bremsanlage nach einem der vorhergehenden Ansprüche 1 bis 13, wobei das Radschlupfregelsystem den Radbremszylindern zugeordnete Ein- und Auslaßventile aufweist, dadurch **gekennzeichnet**, daß die Betätigungseinheiten (8,9) zwischen dem jeweils einem Radbremszylinder (12,13) zugeordneten Einlaßventil (53,54) und dem zugehörigen Radbremszylinder (12,13) angeordnet sind.

16. Bremsanlage nach Anspruch 14 oder 15, wobei das Rad-Radschlupfregelsystem einen sowohl die Ein- und Auslaßventile als auch die Rückförderpumpe aufnehmenden Ventilblock aufweist, dadurch **gekennzeichnet**, daß die Betätigungseinheiten (8,9) im Ventilblock integriert sind.

17. Bremsanlage nach Anspruch 15, wobei das Radschlupfregelsystem einen elektronischen Regler (ABS/ASR-Regler) aufweist, dadurch **gekennzeichnet**, daß der die Betätigungseinheiten (8,9) ansteuernde Regler (FSR-Regler 5) von Ausgangssignalen des ABS/ASR-Reglers (6) beeinflußbar ist.

## Claims

1. Brake system for automotive vehicles including a pedal-operable pressure generator (1) connected to wheel brake cylinders (12, 13, 14, 15) of wheel brakes associated with the individual wheels, at least two actuator units (8, 9) actuatable independently of the pressure generator (1) and arranged in hydraulic connections (10, 11) between pressure generator (1) and wheel brake cylinders (12, 13) to permit shutting off the hydraulic connections (10, 11), each of the actuator units including one cylinder-and-piston assembly (21) and one actuator (20), and an electronic controller (DSC controller) (6) whose control signals serve to actuate the actuator units (8, 9), wherein, on simultaneous actuation of the pressure generator (1) and at least one actuator unit (8, 9), the force resulting from the pressure build-up in the pressure generator (1) is added to the external actuating force generated by the actuator (20) and applied to the piston (22, 25) of the cylinder-and-piston assembly (21, 16, 17, 18, 19),
**characterized** in that the actuator (20) is an electromagnet (24) whose armature is the piston (22).

2. Brake system as claimed in claim 1,
**characterized** in that the electromagnet (24) is a stroke magnet whose action of force is controlled irrespective of stroke in response to output signals of a magnetic flux sensor (Hall sensor 31).

3. Brake system as claimed in claim 1,
**characterized** in that the electromagnet (24) is a stroke magnet whose action of force is controlled irrespective of stroke in response to output signals of a differential pressure sensor (57, 58) sensing the pressure differential between the inlet pressure and the outlet pressure of the actuator unit (8, 9).

4. Brake system as claimed in claim 1,
**characterized** in that the cylinder-and-piston assembly (21) and the actuator (20 or 24) are accommodated in one housing (32).

5. Brake system as claimed in claim 4,
**characterized** in that the piston (22) is a hollow piston which is sealedly guided on a cylindrical outlet port (35) and defines in the housing (32) a hydraulic annular chamber (34) to which the hydraulic pressure of the pressure generator (1) can be applied.

6. Brake system as claimed in claim 4,
**characterized** in that the piston (22) is a stepped hollow piston which is sealedly guided on a cylindrical outlet port (35) and defines in the housing (32) a pneumatic annular chamber (39) which is connected to the end surface of the large-diameter step (37) remote from the annular chamber, and the small-diameter step (38) is sealed in the housing (32) and can be acted upon by the hydraulic pressure of the pressure generator (1).

7. Brake system as claimed in claim 6,
**characterized** in that a filter element (62) precedes the small-diameter step (38), serving additionally as a stop (30) for a valve member (29) of the central valve (27) which shuts off the hydraulic connection between pressure generator (1) and wheel brakes (12, 13, 14, 15).

8. Brake system for automotive vehicles including a pedal-operable pressure generator (1) connected to wheel brake cylinders (12, 13, 14, 15) of wheel brakes associated with the individual wheels, at least two actuator units (8, 9) actuatable independently of the pressure generator (1) and arranged in hydraulic connections (10, 11) between pressure generator (1) and wheel brake cylinders (12, 13) to permit shutting off the hydraulic connections (10, 11), each of the actuator units including one cylinder-and-piston assembly (21) and one actuator (20), and an electronic controller (DSC controller) (6) whose control signals serve to actuate the actuator units (8, 9), wherein, on simultaneous actuation of the pressure generator (1) and at least one actuator unit (8, 9), the force resulting from the pressure build-up in the pressure generator (1) is added to the external actuating force generated by the actuator (20) and applied to the piston (25) of the cylinder-and-piston assembly (16, 17, 18, 19), and wherein the actuator (20) is a hydraulic auxiliary pressure source,
**characterized** in that the auxiliary pressure source is a high-pressure accumulator (42).

9. Brake system as claimed in claim 8,
**characterized** in that the high-pressure accumulator (42) is connectable by way of a charging valve (43) to a hydraulic pump (44) which, in turn, is connectable to the pressure generator (1) by way of a change-over or pressure-limiting valve (45).

10. Brake system as claimed in claim 8 or 9,
**characterized** in that all cylinder-and-piston assemblies (16, 17, 18, 19) are connected to a central actuator (20) by way of separating valves (46, 47, 48, 49, 50, 51).

11. Brake system as claimed in claim 10,
**characterized** in that the separating valves (46, 47, 48, 49) are electromagnetically operable, normally open or normally closed two-way/two-position directional control valves.

12. Brake system as claimed in claim 8 or 9,
**characterized** in that all cylinder-and-piston assemblies (16, 17, 18, 19) are connectable to the high-pressure accumulator (42) by way of pressure control valves (50, 51).

13. Brake system as claimed in claim 12,
**characterized** in that the pressure control valves (50, 51) are electromagnetically operable three-way/three-position directional control valves which, in a first switch position (initial position), permit a connection between the cylinder-and-piston assemblies (16, 17, 18, 19) and an unpressurized pressure fluid supply reservoir (61), with a simultaneous disconnection of the high-pressure accumulator (42), in a second switch position, separate the cylinder-and-piston assemblies (16, 17, 18, 19) from the high-pressure accumulator (42) and from the pressure fluid supply reservoir (61) and, in a third switch position, provide a connection between the cylinder-and-piston assemblies (16, 17, 18, 19) and the high-pressure accumulator (42), with a simultaneous disconnection of the pressure fluid supply reservoir (61).

14. Brake system as claimed in any one of claims 1 to 13,
**characterized** in that it includes a hydraulic wheel slip control system which operates according to the recirculation principle, wherein the actuator units (8, 9) are arranged at the outlet of the return pump (52) in front of the inlet valve (53, 54) respectively associated with a wheel brake cylinder (12, 13).

15. Brake system as claimed in any one of claims 1 to 13, wherein the wheel slip control system includes inlet and outlet valves associated with the wheel brake cylinders,
**characterized** in that the actuator units (8, 9) are interposed between the inlet valve (53, 54) respectively associated with a wheel brake cylinder (12, 13) and the related wheel brake cylinder (12, 13).

16. Brake system as claimed in claim 14 or 15, wherein the wheel slip control system includes a valve block which accommodates the inlet and outlet valves and the return pump,
**characterized** in that the actuator units (8, 9) are integrated in the valve block.

17. Brake system as claimed in claim 15, wherein the wheel slip control system includes an electronic controller (ABS/TCS controller),
**characterized** in that the controller (driving stability controller 5) which actuates the actuator units (8, 9) can be influenced by output signals of the ABS/TCS controller (6).

## Revendications

1. Système de freinage, pour véhicule automobile, comprenant un générateur de pression (1), qui peut être actionné par une pédale et auquel des cylindres de frein de roue (12, 13, 14, 15) appartenant à des freins de roue associés aux différentes roues sont raccordés, au moins deux unités d'actionnement (8, 9), qui peuvent être commandées d'une manière indépendante du générateur de pression (1) et qui sont disposées dans les liaisons hydrauliques (10, 11) situées entre le générateur de pression (1) et les cylindres de frein de roue (12, 13), permettent un blocage des liaisons hydrauliques (10, 11) et sont formées chacune d'un agencement cylindre-piston (21) et d'un actionneur (20), et un régulateur électronique (régulateur FSR) (6) dont des signaux de commande servent à commander les unités d'actionnement (8, 9), tandis que, lors d'un actionnement simultané du générateur de pression (1) et d'au moins une unité d'actionnement (8, 9), une addition de la force résultant de l'établissement de pression dans le générateur de pression (1) et de la force d'actionnement extérieur exercée par l'actionneur (20) se produit sur le piston (22, 25) de l'agencement cylindre-piston (21, 16, 17, 18, 19), caractérisé en ce que l'actionneur (20) est formé d'un électroaimant (24) dont l'armature mobile constitue le piston (22).

2. Système de freinage selon la revendications 1, caractérisé en ce que l'électroaimant (24) est formé d'un électroaimant à entrefer variable dont l'effet dynamique est réglé, indépendamment de la course, en fonction de signaux de sortie d'un capteur de flux magnétique (capteur Hall 31).

3. Système de freinage selon la revendication 1, caractérisé en ce que l'électroaimant (24) est formé d'un électroaimant à entrefer variable dont l'effet dynamique est réglé, indépendamment de la course, en fonction de signaux de sortie d'un capteur de pression différentielle (57, 58) qui relève la différence de pression entre la pression d'entrée et la pression de sortie de l'unité d'actionnement (8, 9).

4. Système de freinage selon la revendication 1, caractérisé en ce que l'agencement cylindre-piston (21) et l'actionneur (20 ou 24) sont disposés dans un boîtier (32).

5. Système de freinage selon la revendication 4, caractérisé en ce que le piston (22) est réalisé sous forme d'un piston creux guidé d'une manière étanche sur un raccord cylindrique de sortie (35) et délimite dans le boîtier (32) une chambre annulaire hydraulique (34) qui est telle que la pression hydraulique du générateur de pression (1) puisse lui être appliquée.

6. Système de freinage selon la revendication 4, caractérisé en ce que le piston (22) est réalisé sous forme d'un piston creux de forme étagée qui est guidé d'une manière étanche sur un raccord cylindrique de sortie (35) et délimite dans le boîtier (32) une chambre annulaire pneumatique (39) qui communique avec la surface frontale, située à l'opposé de la chambre annulaire, de la partie de forme étagée (37) de plus grand diamètre, tandis que la partie de forme étagée (38) de plus petit diamètre est guidée d'une manière étanche dans le boîtier (32) et est telle que la pression hydraulique du générateur de pression (1) puisse lui être appliquée.

7. Système de freinage selon la revendication 6, caractérisé en ce qu'un élément de filtration (62) est disposé en amont de la partie de forme étagée (38) de plus petit diamètre, cet élément de filtration servant en même temps de butée (30) pour l'oburateur de valve (29) d'une valve centrale (27) qui bloque la liaison hydraulique entre le générateur de pression (1) et les freins de roue (12, 13, 14, 15).

8. Système de freinage, pour véhicule automobile, comprenant un générateur de pression (1), qui peut être actionné par une pédale et auquel des cylindres de frein de roue (12, 13, 14, 15) appartenant à des freins de roue associés aux différentes roues sont raccordés, au moins deux unités d'actionnement (8, 9), qui peuvent être commandées d'une manière indépendante du générateur de pression (1) et qui sont disposées dans les liaisons hydrauliques (10, 11) situées entre le générateur de pression (1) et les cylindres de frein de roue (12, 13), permettent un blocage des liaisons hydrauliques (10, 11) et sont formées chacune d'un agencement cylindre-piston (21) et d'un actionneur (20), et un régulateur électronique (régulateur FSR) (6) dont des signaux de commande servent à commander les unités d'actionnement (8, 9), tandis que, lors d'un actionnement simultané du générateur de pression (1) et d'au moins une unité d'actionnement (8, 9), une addition de la force résultant de l'établissement de pression dans le générateur de pression (1) et de la force d'actionnement extérieur exercée par l'actionneur (20) se produit sur le piston (25) de l'agencement cylindre-piston (16, 17, 18, 19), et que l'actionneur (20) est formé d'une source de pression auxiliaire hydraulique, caractérisé en ce que la source de pression hydraulique est formée d'un accumulateur à haute pression (42).

9. Système de freinage selon la revendication 8, caractérisé en ce que l'accumulateur à haute pression (42) peut être raccordé par l'intermédiaire d'une valve de chargement (43) à une pompe hydraulique (44) qui peut être reliée au générateur de pression (1) par l'intermédiaire d'une valve de commutation ou de limitation de pression (45).

10. Système de freinage selon la revendication 8 ou 9, caractérisé en ce que les agencements cylindre-piston (16, 17, 18, 19) sont tous raccordés à un actionneur (20) à action centrale par l'intermédiaire de valves d'isolement (46, 47, 48, 49, 50, 51).

11. Système de freinage selon la revendication 10, caractérisé en ce que les valves d'isolement (46, 47, 48, 49) sont réalisées sous forme de valves à 2 voies/2 positions à actionnement électromagnétique et soit ouvertes en l'absence de courant, soit fermées en l'absence de courant.

12. Système de freinage selon la revendication 8 ou 9, caractérisé en ce que les agencements cylindre-piston (16, 17, 18, 19) peuvent tous être raccordés à l'accumulateur à haute pression (42) par l'intermédiaire de valves de régulation de pression (50, 51).

13. Système de freinage selon la revendication 12, caractérisé en ce que les valves de régulation de pression (50, 51) sont réalisées sous forme de valves à 3 voies/3 positions à actionnement électromagnétique qui, dans une première position de commutation (position de base), permettent une liaison des agencements cylindre-piston (16, 17, 18, 19) avec un réservoir de stockage d'agent de pression (61) qui n'est pas sous pression, tout en isolant en même temps l'accumulateur à haute pression (42), tandis que, dans une deuxième position de commutation, elle isolent les agencements cylindre-piston (16, 17, 18, 19) aussi bien vis-à-vis de l'accumulateur à haute pression (42) que vis-à-vis du réservoir de stockage d'agent de pression (61) et que, dans une troisième position de commutation, elles réalisent une liaison des agencements cylindre-piston (16, 17, 18, 19) avec l'accumulateur à haute pression (42), tout en isolant en même temps le réservoir de stockage d'agent de pression (61).

14. Système de freinage selon l'une des revendications 1 à 13, caractérisé en ce qu'il comprend un système hydraulique de régulation du glissement de roue fonctionnant suivant le principe de retour, tandis que, pour chaque valve d'entrée (53, 54) associée à un cylindre de frein de roue (12, 13), l'une des unités d'actionnement (8, 9) est disposée à la sortie de la pompe de retour (52) respective et en amont de la valve d'entrée (53, 54) considérée.

15. Système de freinage selon l'une des revendications précédentes 1 à 13, dans lequel le système de régulation du glissement de roue comprend des valves d'entrée et valves de sortie associées aux cylindres de frein de roue, caractérisé en ce que, pour chaque valve d'entrée (53, 54) associée à un cylindre de frein de roue (12, 13), l'une des unités d'actionnement (8, 9) est disposée entre la valve d'entrée (53, 54) considérée et le cylindre de frein de roue (12, 13) correspondant.

16. Système de freinage selon la revendication 14 ou 15, dans lequel le système de régulation du glissement de roue comprend un bloc de valves contenant aussi bien les valves d'entrée et valves de sortie que la pompe de retour, caractérisé en ce que les unités d'actionnement (8, 9) sont intégrées dans le bloc de valves.

17. Système de freinage selon la revendication 15, dans lequel le système de régulation du glissement de roue comprend un régulateur électronique (régulateur ABS/ASR), caractérisé en ce que le régulateur (régulateur FSR 5) commandant les unités d'actionnement (8, 9) est tel que des signaux de sortie du régulateur ABS/ASR (6) peuvent avoir une influence sur lui.
